Europäisches Patentamt

European Patent Office

Office européen des brevets

(19)

(11) Veröffentlichungsnummer: **0 290 838 B1**

# (12) EUROPÄISCHE PATENTSCHRIFT

(45) Veröffentlichungstag der Patentschrift :
05.06.91 Patentblatt 91/23

(51) Int. Cl.⁵ : **H04N 5/05, H03L 7/10**

(21) Anmeldenummer : **88106474.5**

(22) Anmeldetag : **22.04.88**

(54) **Schaltungsanordnung zur automatischen Umschaltung der Regelgeschwindigkeit eines Phasenregelkreises.**

(30) Priorität : 13.05.87 DE 3715929

(43) Veröffentlichungstag der Anmeldung :
17.11.88 Patentblatt 88/46

(45) Bekanntmachung des Hinweises auf die
Patenterteilung :
05.06.91 Patentblatt 91/23

(84) Benannte Vertragsstaaten :
AT BE CH DE ES FR GB IT LI LU NL SE

(56) Entgegenhaltungen :
EP-A- 0 085 615
DE-A- 3 120 930
US-A- 4 250 525
US-A- 4 266 245

(73) Patentinhaber : **Deutsche Thomson-Brandt GmbH**
**Hermann-Schwer-Strasse 3 Postfach 1307**
**W-7730 Villingen-Schwenningen (DE)**

(72) Erfinder : **Dieterle, Franz**
**Sommerauerstrasse 31**
**W-7742 St. Georgen (DE)**
Erfinder : **Mai, Udo**
**Mühleschweg 2**
**W-7730 VS-Villingen 23 (DE)**
Erfinder : **Hartmann, Uwe**
**Tallardstrasse 15**
**W-7730 Villingen-Schwenningen (DE)**

**Beschreibung**

Die Erfindung bezieht sich auf eine Schaltungsanordnung zur automatischen Umschaltung der Regelgeschwindigkeit eines Phasenregelkreises für einen Oszillator zur Erzeugung von Synchronsignalen für die Zeilenablenkung von Elektronenstrahlen in einer Bildröhre eines Fernsehempfängers.

Es ist bekannt, daß die Regelgeschwindigkeit des Phasenregelkreises für einen Zeilenoszillator in einem Fernsehempfänger erhöht werden muß, d.h. daß der Phasenregelkreis eine kleinere Zeitkonstante besitzen muß, wenn der Fernsehempfänger an einen Videorecorder angeschlossen ist und die von diesem gelieferten Videosignale auf den Bildschirm wiedergeben soll. Zwecks besserer Störbefreiung muß bei Empfang eines Sendersignals diese Zeitkonstante des Phasenregelkreises wieder vergrößert, d.h. die Regelgeschwindigkeit muß verkleinert werden. Die Regelgeschwindigkeit kann entweder durch Umschalten des Kapazitätswertes des Kondensators im Filterkreis der Phasenregelschleife verändert werden oder durch Umschalten der Amplitude des Regelstroms von den Kondensator auf- bzw. entladenden Konstantstromquellen. Der Wert der Änderung ist eine festgelegte Größe, die je nach Betriebsart – Videorecorder oder Fernsehempfang – vorgegeben ist. Wenn die Regelung mit den zuvor zitierten Konstantstromquellen erfolgt, werden diese vom Synchronimpuls ein- und ausgeschaltet und von einer Flanke des vom Oszillator erzeugten Signals in ihrer Polarität gesteuert. Im eingeschwungenen Zustand erfolgt die Polaritäts-Umschaltung der Konstantstromquellen dann, wenn z.B. die Flanke des Oszillatorsignals in der Mitte des Synchronimpulses liegt. Eingeschaltet wird der Regelstrom durch das Synchronsignal aus dem Amplitudensieb des Fernsehempfängers. Das Synchronsignal selbst wird nur während der Dauer eines vom Oszillator gebildeten Fensters freigegeben. Dieses Fenster besitzt z.B. eine Breite von 8 Mikrosekunden. Der Synchronimpuls selbst ist 4,5 Mikrosekunden breit. Der im Betrag konstante Regelstrom verursacht innerhalb des Fensters unabhängig von der Phase des erzeugten Oszillatorsignals eine bestimmte Ladung Q im Filterkondensator, die nur von der Einschaltzeit der Konstantstromquellen abhängt. Innerhalb des Fensters auftretende Störimpulse können die Ladung und damit die Phase beeinflussen. Dabei treten ausserhalb und an den Flanken des Synchronimpulses Störimpulse stärker in Erscheinung als Störimpulse innerhalb des Synchronimpulses.

Der Erfindung liegt die Aufgabe zugrunde, die Phasenregelung und deren Regelgeschwindigkeit von diesen Störungen unabhängig zu machen. Hierdurch wird eine durchweg kleinere Zeitkonstante ermöglicht. Diese Aufgabe wird durch die im Patentanspruch angegebene Erfindung gelöst.

Nachstehend wird das Wesentliche der Erfindung an einem Ausführungsbeispiel erläutert.

Figur 1 zeigt einen gestörten Synronimpuls
Figur 2 zeigt ein Prinzipschaltbilld der Erfindung
Figur 3 zeigt dazugehörige Diagramme.

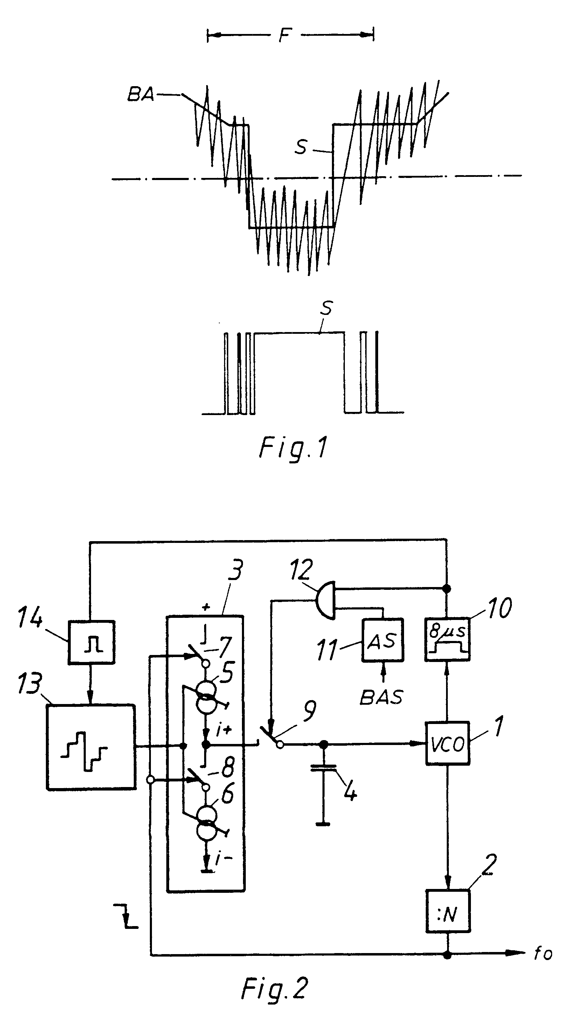

In Figur 1a ist der Verlauf eines BAS-Signals mit Störungen dargestellt, deren Einfluss mit Hilfe der nachfolgend beschriebenen Erfindung vermindert werden soll. Innerhalb eines Synchronisierfensters F tritt der Synchronimpuls S auf, der in einem Amplitudensieb über dessen Abschneidpegel vom BA-Signal getrennt wird. In Figur 1b ist der abgetrennte Synchronimpuls gezeigt. Man erkennt, daß nur an den Flanken des Synchronimpulses Störungen auftreten, während sie in der Impulsmitte nicht erscheinen. Die Störimpulse sind innerhalb des Synchronisierfensters nicht gleichmäßig verteilt. Der Erfindung liegt die Erkenntnis zugrunde, daß die Regelgeschwindigkeit in der Nähe der Flanken des Synchronimpulses niedrig sein muß und diese in dessen Mitte ohne Nachteil hoch sein kann, um die Störeinflüsse zu eliminieren.

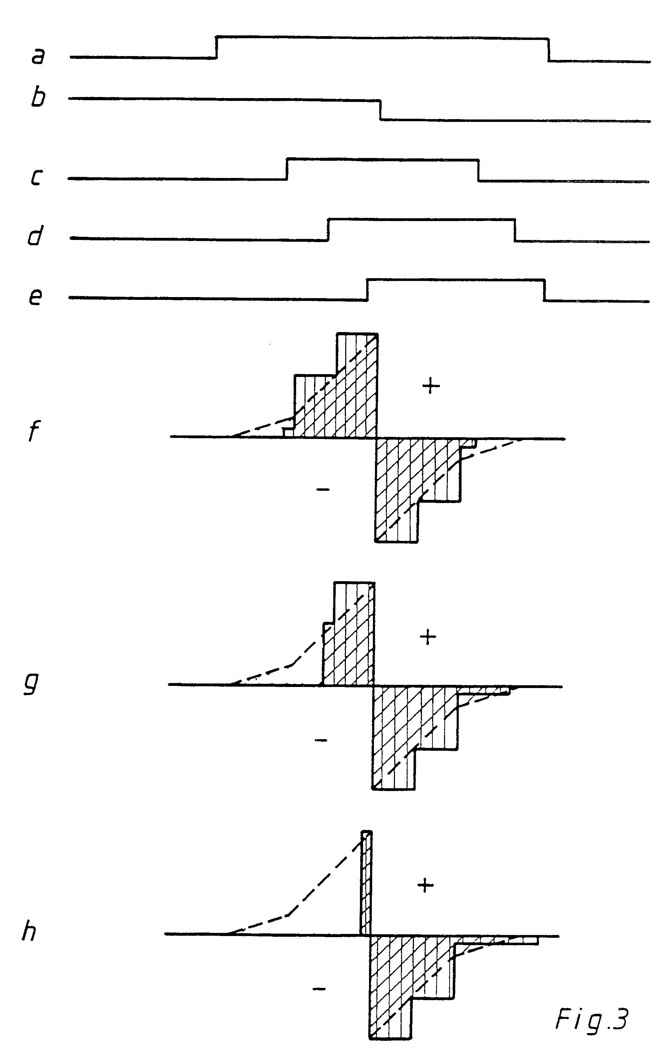

In Figur 2 ist ein spannungsgesteuerter Oszillator (VCO) 1 dargestellt, der mit Hilfe einer phasengeregelten Schleife (PLL) auf die Frequenz des Sendersignals (BAS) synchronisiert wird. Die Frequenz des Oszillators 1 wird auf die Synchronisierfrequenz mit Hilfe eines Teilers 2 heruntergeteilt und in einer Phasenvergleichsstufe 3 mit dem BAS-Signal verglichen. Phasen- und Frequenzabweichungen ergeben ein Steuersignal an einem Filterkondensator 4, das die Frequenz und Phasein die Soll-Lage schiebt. Die Phasenvergleichsstufe 3 arbeitet mit zwei Konstantstromquellen 5 und 6, von denen die eine, 5, den Kondensator auf- und die andere, 6, den Kondensator 4 entlädt. Ob auf- oder entladen wird, bestimmt die negative Flanke des erzeugten Oszillatorsignals, dessen Pegel bestimmt, ob der Kontakt 7 zur Aufladung oder 8 zur Entladung geschlossen ist. Die Auf- bzw. Entladung geschiehtüber einen Schalter 9, der geschlossen wird, wenn ein durch den Oszillator 1 erzeugtes Zeitfenster 10 mit der Breite von z.B. 8 Mikrosekundenmit dem Synchronimpuls aus dem Amplitudensieb 11 zeitlich zusammenfällt, was durch die UND-Verknüpfung 12 symbolisch dargestellt sein soll. Es ist weiter eine Vorrichtung 13 vorgesehen, die die Regelstromamplitude nun nicht von einem bestimmten niedrigen Wert auf einen vorgegebenen höheren Wert umschaltet, sondern die Vorrichtung 13 schaltet die Amplitude vom Rand des Fensters beginnend bis zur Mitte hoch und von dort ab wieder herunter, wobei die Umschaltung der Amplitude und damit die Regelgeschwindigkeit in zunehmendem Maße vergrößert bzw. abnehmendem Maße verkleinert wird. Hierfür gibt es verschiedene Möglichkeiten des zeitlichen Verlaufs der Regelgeschwindigkeitsänderung. Dies kann zum Beispiel dadurch geschehen, daß ein zur Mitte des Zeitfensters 10 (Fig. 3a) symmetrisch liegendes Zeitfenster (14) von 2 Mikrosenkunden den Regelstrom um eine vorgegebene Stufe erhöht.

In Figur 3 ist mit dem Diagramm a das Synchronisierfenster dargestellt, wobei das Oszillatorsignal b mit seiner Flanke bei korrekter Phasenlage genau in der Mitte des Synchronimpulses c liegt. Bei d und e sind jeweils um 1 Mikrosenkunde bzw. 2 Mikrosekunden z.B. in Folge Jitter verschobene Synchronimpulse dargestellt. Bei f sind der Ladestrom i+ und der Entladestrom i– dargestellt, wie sie sich für eine korrekte Phasenlage des Synchronimpulses nach Fig. 3c ergeben. Die Ströme i+ und i– der beiden Stromquellen 5 bzw. 6 werden nicht in bekannter Weise bei Umschalten auf die große Regelgeschwindigkeit sofort auf einen konstanten höheren Wert umgeschaltet, sondern entweder stufenweise oder wie in gestrichelter Darstellung kontinuierlich zur Fenstermitte ansteigend. Dadurch können Störimpulse ausserhalb der Synchronimpulse die Regelung weniger beeinflussen. Zur Phasenverschiebung des Syrchronimpulses z.B. nach Fig. 3d gehört das Diagramm nach Fig. 3g und zu Fig. 3e das Diagramm gemäß Fig. 3h.

Durch die Zunahme der Ströme i+ und i– zur Fenstermitte hin wird in diesem Bereich die Beeinflußbarkeit der Regelgeschwindigkeit erhöht. In diesem Bereich befindet sich der Synchronimpuls als Nutzsignal mit einem vernachlässigbaren Störanteil im Bereich seiner Flanken. Durch die Beeinflussung der Regelgeschwindigkeit in Form der Erhöhung zur Fenstermitte hin ist es möglich, daß die Regelung bei zeitlichen Verschiebungen des Synchronsignals (Jitter) im Videorecorderbetrieb schnell folgen kann, ohne daß ein merkbarer Verlust an Störbefreiung hingenommen werden muß.

## Ansprüche

1. Schaltungsanordnung zur automatischen Umschaltung der Regelgeschwindigkeit eines Phasenregelkreises für einen Oszillator zur Erzeugung von Synchronsignalen für die Zeilenablenkung von Elektronenstrahlen in einer Bildröhre eines Fernsehempfänger, **dadurch gekennzeichnet,** daß eine Vorrichtung vorgesehen ist, die die Regelgeschwindigkeit innerhalb eines Synchronisierfensters, das von der Schaltungsanordnung vorgegeben ist und innerhalb dessen die sonst unterbrochene Regelschleife bei Auftreten eines Synchronsignales jeweils aktiviert wird, zur Fenstermitte hin in zunehmendem Maße vergrößert und von diesem Zeitpunkt ab in abnehmendem Maße verkleinert.

2. Schaltungsanordnung nach Anspruch 1, **dadurch gekennzeichnet,** daß die Vorrichtung die Regelgeschwindigkeit stufenweise vergrößert bzw. verkleinert.

3. Schaltungsanordnung nach Anspruch 1, **dadurch gekennzeichnet,** daß die Vorrichtung die Regelgeschwindigkeit kontinuierlich vergrößert bzw. verkleinert.

4. Schaltungsanordnung nach Anspruch 1, **dadurch gekennzeichnet,** daß die Vorrichtung die Regelgeschwindigkeit innerhalb des Synchronisierfensters kontinuierlich mit unterschiedlichen Steilheiten vergrößert bzw. verkleinert.

5. Schaltungsanordnung nach Anspruch 4, **dadurch gekennzeichnet,** daß die Steilheit der Regelgeschwindigkeitsänderung jeweils am Rand des Synchronisierfensters kleiner als in dessen Mitte ist.

## Claims

1. Circuit arrangement for the automatic switching over of the control rate of a phase control circuit for an oscillator for the generation of synchronizing signals for the line scanning of electron beams in a picture tube of a television receiver, <u>characterized in that</u> a device is provided which, within a synchronizing window which is set by the circuit arrangement and within which the otherwise interrupted control loop is respectively activated on the occurrence of a synchronizing signal, increases the control rate to a growing extent towards the window centre and reduces it to a diminishing extent from this time onwards.

2. Circuit arrangement according to claim 1, <u>characterized in that</u> the device increases or reduces the control rate in steps.

3. Circuit arrangement according to claim 1, <u>characterized in that</u> the device increases or reduces the control rate continuously.

4. Circuit arrangement according to claim 1, <u>characterized in that</u> the device increases or reduces the control rate within the synchronizing window continuously with different degrees of steepness.

5. Circuit arrangement according to claim 4, <u>characterized in that</u> the steepness of the change in control rate is less at the edge of the synchronizing window than in its centre.

## Revendications

1. Montage pour la commutation automatique de la vitesse de régulation d'un circuit de régulation de phase pour un oscillateur destiné à généré des signaux de synchronisation pour le balayage horizontal du faisceau électronique dans un tube image d'un récepteur de télévision, caractérisé en ce qu'on a prévu un dispositif qui, à l'intérieur d'une fenêtre de synchronisation réglée par le montage et dans laquelle la boucle de régulation interrompue par ailleurs est activée à chaque apparition d'un signal de synchronisation, augmente dans une mesure croissante la vitesse de régulation vers le milieu de la fenêtre et à partir de ce moment la réduit dans une mesure décroissante.

2. Montage selon la revendication 1, caractérisé en ce que le dispositif augmente et/ou réduit progressivement la vitesse de régulation.

3. Montage selon la revendication 1, caractérisé en ce que le dispositif augmente et/ou diminue en continu la vitesse de régulation.

4. Montage selon la revendication 1, caractérisé en ce que le dispositif augmente et/ou diminue continuellement la vitesse de régulation à l'intérieur de la fenêtre de synchronisation avec différentes raideurs de pente.

5. Montage selon la revendication 4, caractérisé en ce que la raideur de pente du changement de vitesse de régulation est plus faible au bord de la fenêtre de synchronisation qu'en son milieu.

Fig.1

Fig.2

Fig.3